# EUROPEAN PATENT APPLICATION

(11) **EP 4 199 230 A1**
(43) Date of publication of application: **21.06.2023**
(21) Application number: 22796021.8
(22) Date of filing: 18.04.2022
(51) Int. Cl.: H01M 50/383, H01M 50/24, H01M 50/211

(54) **FLAME ARRESTER AND BATTERY PACK INCLUDING SAME**

(30) Priority: 30.04.2021 KR 20210056422
(71) Applicant: LG Energy Solution, Ltd., Seoul 07335 (KR)
(72) Inventor: YOON, Doohan, Daejeon 34122 (KR)
(74) Representative: Hoffmann Eitle
(86) International application number: PCT/KR2022/005513
(87) International publication number: WO 2022/231188

(57) **Abstract**

A flame arrester according to an embodiment of the present disclosure includes a porous structure; and a housing to which the porous structure is assembled.

## Description

### [TECHNICAL FIELD]

### Cross Citation with Related Application so

This application claims the benefit of Korean Patent Application No. 10-2021-0056422 filed on April 30, 2021 with the Korean Intellectual Property Office, the content of which is incorporated herein by reference in its entirety.

The present disclosure relates to a flame arrester and a battery pack including the same, and more particularly to a flame arrester that blocks external leakage of flames, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are arranged with a separator being interposed between them, and a battery case which seals and houses the electrode assembly together with an electrolyte solution.

Generally, the lithium secondary battery may be classified based on the shape of the exterior material into a can type secondary battery in which the electrode assembly is built into a metal can, and a pouch-type secondary battery in which the electrode assembly is built into a pouch of an aluminum laminate sheet.

In the case of a secondary battery used for small-sized devices, two to three battery cells are arranged, but in the case of a secondary battery used for a middle or large-sized device such as an automobile, a battery module in which a large number of battery cells are electrically connected is used. In such a battery module, a large number of battery cells are connected to each other in series or parallel to form a cell assembly, thereby improving capacity and output. In addition, one or more battery modules can be mounted together with various control and protection systems such as a BMS (battery management system) and a cooling system to form a battery pack.

The battery pack consists of a structure made by combining a plurality of battery modules, and when some battery modules become an overvoltage, overcurrent or overheat state, the safety and operating efficiency of the battery pack may cause a problem. Further, the capacity of the battery pack tends to gradually increase in order to improve the mileage of electric vehicles or the like equipped with the battery pack, whereby it is necessary to design a structure for satisfying the safety standards that are strengthened along with an increase of the energy inside the pack and for securing the safety of a vehicle and a driver.

In particular, when the battery module in the battery pack ignites, there is a risk that high-temperature gas and flame leak to the outside, but in the case of conventional battery packs, a structure capable of cooling the high-temperature gas and flame to prevent external leakage of flames was absent. Therefore, there is a need to provide a structure for blocking the external leakage of high-temperature gas and flame due to the battery module ignition of the battery pack, and thus, securing the safety of a battery pack and an electric vehicle or the like equipped with the battery pack.

### [DETAILED DESCRIPTION OF THE INVENTION]

### [Technical Problem]

It is an object of the present disclosure to provide a flame arrester that blocks external leakage of flames, and a battery pack including the same.

However, the problem to be solved by the embodiments of the present disclosure is not limited to the above-described problems, and can be variously expanded within the scope of the technical idea included in the present disclosure.

### [Technical Solution]

According to one embodiment of the present disclosure, there is provided a flame arrester comprising: a porous structure; and a housing to which the porous structure is assembled.

The porous structure may include being formed by coupling a plurality of tubes in the horizontal and vertical directions.

The plurality of tubes are formed in the same size and shape, and the tube may have a rectangular parallelepiped shape of which the inside is empty.

According to another embodiment of the present disclosure, there is provided a battery pack comprising: a plurality of battery modules; and a pack frame that houses the plurality of battery modules, wherein a flame arrester is formed on the side surface part of the pack frame.

The flame arrestor may include a porous structure.

The porous structure may include being formed by coupling a plurality of tubes in the horizontal and vertical directions.

The plurality of tubes are formed in the same size and shape, and the tube may have a rectangular parallelepiped shape of which the inside is empty.

The tube may be formed of a metal.

The porous structure is assembled with a housing, and the housing may be coupled to a hole formed in a side surface part of the pack frame.

The housing may be formed of the same material as the tube.

The battery pack further includes a first partition wall formed so as to be adjacent to the plurality of battery modules, wherein the first partition wall may be formed in parallel with the side surface part of the pack frame on which the flame arrester is formed.

The battery pack may further include a second partition wall formed between the plurality of battery modules.

The battery pack further includes a third partition wall formed so as to be adjacent to the second partition wall, wherein the third partition wall may be formed at both end parts of the second partition wall.

According to yet another embodiment of the present disclosure, there is provided a device comprising the above-mentioned battery pack.

### [Advantageous Effects]

The battery pack according to an embodiment of the present disclosure can block external leakage of a flame at ignition of the battery pack by a novel type of flame arrester structure. In addition, the safety of the battery pack can be improved by blocking the external leakage of the flame.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a cross-sectional view of a battery pack according to an embodiment of the present disclosure;
Fig. 2 is a perspective view which shows a battery module included in the battery pack of Fig. 1;
Fig. 3 is a perspective view which shows a battery cell included in the battery module of Fig. 2;
Fig. 4 is an enlarged view of a side surface part of the battery pack according to the present disclosure;
Fig. 5 is a perspective view which shows a flame arrester formed in the battery pack of the present disclosure; and
Fig. 6 is an exploded perspective view of a flame arrester formed in the battery pack of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed "on" or "above" the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

The terms "first," "second," etc. mentioned herein may be used to explain various components, but the components should not be limited by the terms. These terms are only used to distinguish one component from the other component.

Hereinafter, the battery pack according to an embodiment of the present disclosure will be described. However, some components of the battery pack will be mainly described, but the present disclosure is not necessarily limited thereto, and may be described with the same or similar contents on the basis of the entire battery pack.

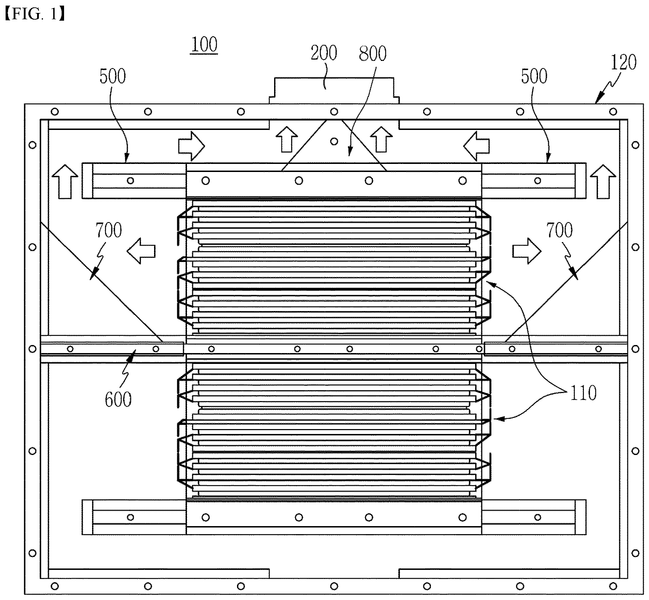

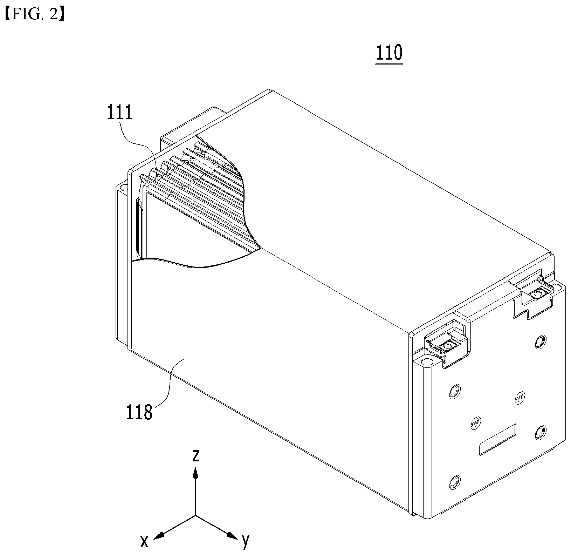

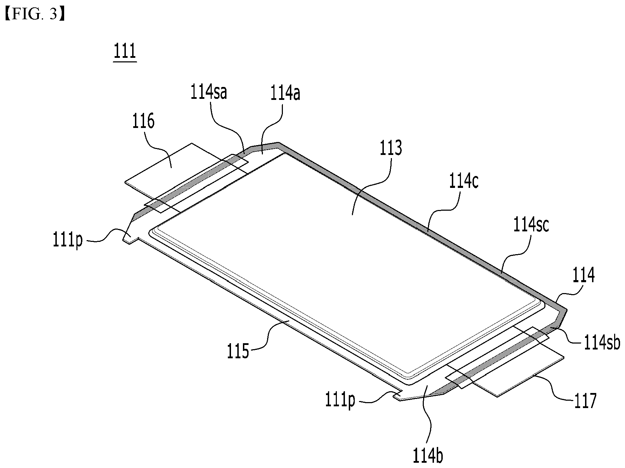

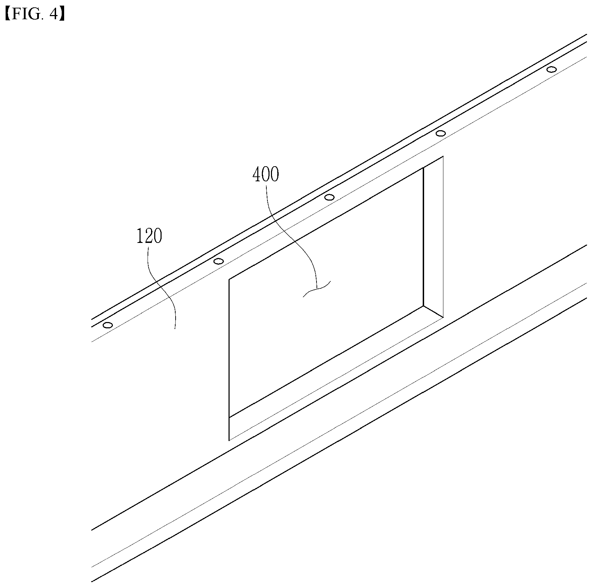

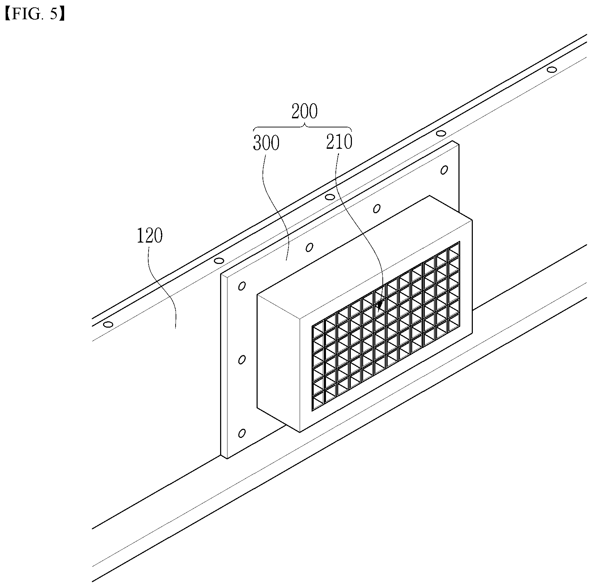

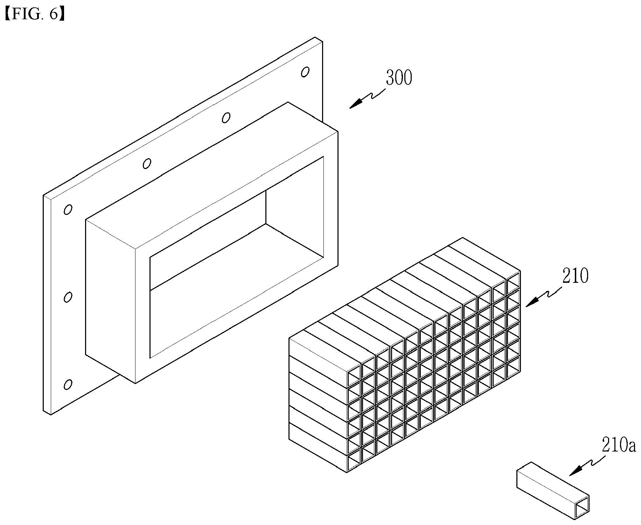

Fig. 1 is a cross-sectional view of a battery pack according to an embodiment of the present disclosure. Fig. 2 is a perspective view which shows a battery module included in the battery pack of Fig. 1. Fig. 3 is a perspective view which shows a battery cell included in the battery module of Fig. 2. Fig. 4 is an enlarged view of a side surface part of the battery pack according to the present disclosure. Fig. 5 is a perspective view which shows a flame arrester formed in the battery pack of the present disclosure. Fig. 6 is an exploded perspective view of a flame arrester formed in the battery pack of the present disclosure.

Referring to Figs. 1 and 2, a battery pack 100 according to an embodiment of the present disclosure includes a plurality of battery modules 110, and a pack frame 120 that houses the plurality of battery modules 110, wherein a flame arrester 200 is formed on the side surface part of the pack frame 120. The flame arrester 200 can be formed regardless of the position as long as it is the side surface part of the pack frame 120, and can be formed in the center of the side surface part of the pack frame 120.

At this time, the plurality of battery modules 110 may include a plurality of battery cells 111. More specifically, a plurality of battery cells 111 may be stacked along a predetermined direction and then mounted on the module frame 118 to configure the battery module 110. Further, since the plurality of battery cells 111 is not particularly limited by the type thereof, a pouch type secondary battery or a prismatic secondary battery may be used, but the pouch type secondary battery is preferable.

For example, referring to Fig. 3, the battery cell 111 according to the present embodiment has a structure in which two electrode leads 116 and 117 face each other and protrude from one end 114a and the other end 114b of the cell body 113, respectively. More specifically, the electrode leads 116 and 117 are connected to an electrode assembly (not shown), and protrude from the electrode assembly (not shown) to the outside of the battery cell 111.

Meanwhile, the battery cell 111 can be manufactured by joining both end parts 114a and 114b of a cell case 114 and one side part 114c connecting them in a state in which an electrode assembly (not shown) is housed in a cell case 114. In other words, the battery cell 111 according to the present embodiment has a total of three sealing parts 114sa, 114sb and 114sc, wherein the sealing parts 114sa, 114sb and 114sc have a structure that is sealed by a method such as heat-sealing, and the remaining other side part may be composed of a coupling part 115. The cell case 114 may be composed of a laminated sheet including a resin layer and a metal layer.

In addition, the bending part 115 may extend long along one edge of the battery cell 111, and a protrusion part 111p of the battery cell 111 called a bat-ear may be formed at an end part of the bending part 115. The battery cell 110 may be configured in plural numbers, and the plurality of battery cells 111 can be stacked so as to be electrically connected to each other.

Meanwhile, referring to Figs. 4 to 6, the flame arrester 200 included in the battery pack 100 according to an embodiment of the present disclosure may include a porous structure 210. At this time, the porous structure 210 may be made by forming a plurality of tubes 210a by a processing method, or may be formed by coupling a plurality of tubes 210a in the horizontal and vertical directions. At this time, the porous structure may include being formed by stacking a plurality of tubes 210a.

Additionally, the shape of the plurality of tubes 210a may be formed in the same size and shape, respectively, wherein the shape of the plurality of tubes 210a is not limited, but may preferably have a rectangular parallelepiped shape of which the inside is empty.

The plurality of tubes 210a have a rectangular parallelepiped shape, thereby facilitating to couple and stack them horizontally and vertically. However, the form or shape may be a cylinder, a polyhedron and a polygonal column of which the inside is empty, within a range that can smoothly perform the function of the flame arrester 200 of the present disclosure.

Further, the plurality of tubes 210a may be bonded after application of an adhesive, or may be coupled by welding, in addition to the coupling by stacking. Furthermore, in addition to the above coupling, they can be variously coupled by a method capable of coupling a plurality of tubes 210a. A plurality of tubes 210a coupled by the above method may form a porous structure 210, wherein the porous structure 210 may include a metal porous structure.

Further, the flame arrestor according to the present embodiment cools the flame when the inside of the battery pack ignites, thereby blocking and preventing the flame from leaking to the outside, and allowing the gas to be discharged to the outside. In the above process, the porous structure of the flame arrester according to the present embodiment has a large surface area, so that the cooling can be effectively performed.

Furthermore, the flame arrester 200 may be formed of a material having high thermal conductivity and capable of withstanding a high-temperature flame caused by ignition in the battery pack. In addition, the heat energy generated from the flame can be quickly transferred to the outside of the pack frame 120 and the battery pack through the high thermal conductivity and the large surface area of the porous structure 210. Therefore, the plurality of tubes 210a are preferably formed of a metal material having high thermal conductivity, and particularly, the plurality of tubes 210a in an embodiment of the present disclosure may be formed of aluminum (Al) or steel. Further, the plurality of tubes 210a may be formed of aluminum and steel. However, the material of the plurality of tubes 210a is not limited thereto.

The porous structure 210 formed by stacking a plurality of tubes 210a as described above may be assembled with the housing 300. At this time, the porous structure 210 and the housing 300 may be formed in the same size so that they can be fitted, and further, they can be fixedly coupled through an adhesive or a coupling member.

Referring to Fig. 4, a hole 400 may be formed on a side surface part of the battery pack 100 according to an embodiment of the present disclosure. Referring to Figs. 4 and 5, the hole 400 may be formed to have the same size as the housing 300, and the housing 300 is coupled to the hole 400 formed in the side surface part of the pack frame 120 so that the flame arrester 200 can be formed on the battery pack according to the present embodiment. Further, the hole 400 can be formed in a size smaller than the housing 300, and the housing 300 may be coupled to the side surface part of the pack frame 120 adjacent to the hole 400 by a coupling member such as a screw, thereby forming the flame arrester 200.

As described above, the flame arrester 200 according to the present embodiment has high thermal conductivity, whereby the heat energy generated by the flame when the inside of the battery pack ignites is quickly transferred to the pack frame 120 and the outside of the battery pack. Thus, the housing 300 may be formed of the same material as the plurality of tubes 210a and the porous structure 210. Thereby, the flame arrester 200 having high thermal conductivity rapidly transfers the heat energy generated from the flame to cool the flame, thereby blocking and preventing the external leakage of the flame. In addition, the flame arrester 200 according to the present embodiment is maintained at a temperature lower than the flame temperature when a flame occurs, thereby achieving the effect of rapidly cooling the heat energy of the flame through the flame arrester 200 .

Next, an internal structure of a battery pack according to an embodiment of the present disclosure will be described.

Referring back to Fig. 1, the battery pack 100 according to the present embodiment may include a first partition wall 500 formed so as to be adjacent to the plurality of battery modules 110. The first partition wall 500 is formed so as to be adjacent to the battery module 110, and may be formed to be in parallel with the side surface part of the pack frame 120 on which the flame arrester 200 is formed. Further, the first partition wall 500 may be formed to be longer than the width of the battery module 110 parallel to the side surface part of the pack frame 120 on which the flame arrester 200 is formed, but is not limited thereto. The flame may be cooled by moving along the first partition wall 500 and reaching the flame arrester 200, and can be discharged to the outside in the form of a gas.

Further, the battery pack 100 may include a second partition wall 600 formed between the plurality of battery modules 110. The second partition wall 600 is formed between adjacent battery modules 110, whereby the flame generated in one battery module 110 can be delayed and blocked from propagating to another battery module 110, and it can perform the role of separating between the plurality of battery modules 110.

In addition, the battery pack 100 of the present disclosure may further include a third partition wall 700 formed so as to be adjacent to the second partition wall 600. Referring to Fig. 1, the third partition wall 700 may be formed at both end parts of the second partition wall 600. Further, the third partition wall 700 is formed at both end parts of the second partition wall 600, and the third partition walls 700 may be formed in plural numbers so as to have shapes symmetrical to each other with respect to the center of the second partition wall 600. Moreover, the shape of the third partition wall 700 may be a triangular column having a triangular cross section, or a triangular column having a right-angled triangular cross section. Specifically, it may be a triangular column having a right-angled triangular or a right-angled isosceles triangular cross section, but is not limited thereto.

However, in Fig. 1, only the third partition wall 700 formed in the upper direction of the second partition wall 600 with respect to the cross-section of the battery pack is illustrated, but the third partition wall 700 may also be formed in a downward direction of the second partition wall 600. At this time, the third partition wall 700 can adjust the movement path of the flame at ignition of the battery pack 100. Further, the third partition wall 700 is formed in the above shape, so that the adjustment of the path of the flame can be more effective.

Further, the battery pack 100 according to the present embodiment can further include a fourth partition wall 800 formed so as to be adjacent to the flame arrester 200. The fourth partition wall 800 may be formed adjacent to the flame arrester 200 to guide the path of the flame. In particular, the fourth partition wall 800 may be a triangular column having a triangular cross section in which one vertex is disposed toward the flame arrester 200 so that the flame can be emitted to the outside by the flame arrester 200, but is not limited thereto. The fourth partition wall 800 forms a path for the flame to move along both surfaces connected to the one vertex, which may be thus effective in guiding the flame to the outside.

The battery pack 100 of the present disclosure includes the flame arrester 200 and the first, second, third, and fourth partition walls 500, 600, 700 and 800, whereby the heat energy of the flame at the time of internal ignition of the battery pack 100 is quickly transmitted to the outside of the pack frame 120 and the battery pack, and only the cooled gas shape is discharged to the outside, thereby blocking and preventing the external leakage of the flame. In particular, the first, second, third, and fourth partition walls 500, 600, 700 and 800 form a movement path of the flame when a flame is generated, so that the flame can be quickly cooled, thereby improving the safety of the battery pack.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

Although preferred embodiments of the present disclosure have been described in detail above, the scope of the present disclosure is not limited thereto, and numerous other modifications and embodiments can be devised by those skilled in the art, without departing from the spirit and scope of the principles of the invention described in the appended claims. Further, these modifications should not be understood individually from the technical spirit or perspective of the present disclosure.

### [Description of Reference Numerals]

100: battery pack
110: battery module
111: battery cell
118: module frame
120: pack frame
200: flame arrester
210: porous structure
210a: tube
300: housing
400: hole
500: first partition wall
600: second partition wall
700: third partition wall
800: fourth partition wall

## Claims

1. A flame arrester comprising:
a porous structure; and
a housing to which the porous structure is assembled.

2. The flame arrester of claim 1, wherein:
the porous structure comprises being formed by coupling a plurality of tubes in the horizontal and vertical directions.

3. The flame arrester of claim 2, wherein:
the plurality of tubes are formed in the same size and shape, and the tube has a rectangular parallelepiped shape of which the inside is empty.

4. A battery pack comprising:
a plurality of battery modules; and
a pack frame that houses the plurality of battery modules,
wherein a flame arrester is formed on the side surface part of the pack frame.

5. The battery pack of claim 4, wherein:
the flame arrestor comprises a porous structure.

6. The battery pack of claim 5, wherein:
the porous structure comprises being formed by coupling a plurality of tubes in the horizontal and vertical directions.

7. The battery pack of claim 6, wherein:
the plurality of tubes are formed in the same size and shape, and the tube has a rectangular parallelepiped shape of which the inside is empty.

8. The battery pack of claim 6, wherein:
the tube is formed of a metal.

9. The battery pack of claim 6, wherein:
the porous structure is assembled with a housing, and
the housing is coupled to a hole formed in a side surface part of the pack frame.

10. The battery pack of claim 9, wherein:
the housing is formed of the same material as the tube.

11. The battery pack of claim 4,
which further comprises a first partition wall formed so as to be adjacent to the plurality of battery modules,
wherein the first partition wall is formed in parallel with the side surface part of the pack frame on which the flame arrester is formed.

12. The battery pack of claim 11,
which further comprises a second partition wall formed between the plurality of battery modules.

13. The battery pack of claim 12,
which further comprises a third partition wall formed so as to be adjacent to the second partition wall,
wherein the third partition wall is formed at both end parts of the second partition wall.

14. A device comprising the battery pack of claim 4.
